Europäisches Patentamt

European Patent Office

Office européen des brevets

(19)

(11) Veröffentlichungsnummer: **0 000 933**
**B1**

(12)
# EUROPÄISCHE PATENTSCHRIFT

(45) Veröffentlichungstag der Patentschrift: **30.03.83**

(21) Anmeldenummer: **78100702.6**

(22) Anmeldetag: **18.08.78**

(51) Int. Cl.³: **C 08 J 9/00, C 08 L 75/04, C 02 F 1/40, C 09 K 3/32, C 08 G 18/14**

(54) Hydrophobe Polyurethanschaumstoffe, Verfahren zu deren Herstellung und Verwendung zur Absorption von Öl und gegebenenfalls halogenhaltigen, hydrophoben Verbindungen aus Wasser.

(30) Priorität: **25.08.77 DE 2738268**

(43) Veröffentlichungstag der Anmeldung:
**07.03.79 Patentblatt 79/5**

(45) Bekanntmachung des Hinweises auf die Patenterteilung:
**30.03.83 Patentblatt 83/13**

(84) Benannte Vertragsstaaten:
**BE DE FR GB**

(56) Entgegenhaltungen:
**CA - A - 996 037**
**DE - A - 960 855**
**DE - A - 1 944 679**
**FR - A - 2 250 779**
**US - A - 3 165 483**
**US - A - 3 679 058**
**US - A - 3 886 067**

(73) Patentinhaber: **BASF Aktiengesellschaft**
**Carl-Bosch-Strasse 38**
**D-6700 Ludwigshafen (DE)**

(72) Erfinder: **Jarre, Wolfgang, Dr.**
**Limesstrasse 3**
**D-6700 Ludwigshafen (DE)**
Erfinder: **Wurmb, Rolf, Dr.**
**Kastellweg 10**
**D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Hydrophobe Polyurethanschaumstoffe, Verfahren zu deren Herstellung und Verwendung zur
Absorption von Öl und gegebenenfalls halogenhaltigen, hydrophoben Verbindungen aus Wasser

Die Erfindung betrifft Polyurethanschaumstoffe mit Dichten von 5 bis 26,5 g/Liter, die aufgrund ihres hydrophoben Charakters und ihres Gehalts an geschlossenen und offenen Zellen vorzüglich zur Absorption von Öl und gegebenenfalls halogenhaltigen, hydrophoben Verbindungen in Gewässern geeignet sind.

Die Herstellung von Polyurethanschaumstoffen aus Polyisocyanaten, Polyhydroxyverbindungen, gegebenenfalls Kettenverlängerungsmitteln, Hilfs- und Zusatzstoffen ist aus zahlreichen Patent- und Literaturveröffentlichungen bekannt. Verweisen möchten wir beispielsweise auf die Monographien von J. H. Saunders und K. C. Frisch, High Polymers, Band XVI "Polyurethanes" Teil I und II (Verlag Interscience Publishers, New York), und R. Vieweg und A. Höchtlen, Kunststoff-Hanbuch, Band VII, Polyurethane, Carl Hanser Verlag, München.

Es ist ferner vorgeschlagen worden, zur Ölabsorption von Wasseroberflächen offenzellige Schaumstoffe aus Polyurethanen, Harnstoff-Formaldehydkondensaten, Polystyrol, Celluloseacetat u.a. zu verwenden. Nach Angaben der US—PS 3 779 908 läßt man zur Ölabsorption eine Dispersion von Rohöl in Wasser durch einen flexiblen, offenzelligen Schaumstoff fleißen. Oleophile halbharte bis harte Schaumstoffe werden ferner gemäß US—PS 3 886 067 auf ölhaltigen Wasseroberflächen verteilt und nach erfolgter Ölabsorption an den Schaumstoff wieder gesammelt und entfernt.

Nachteilig an den beschriebenen Verfahren ist, daß sie auf offener See, insbesondere bei rauhem Seegang, nicht angewandt werden können, der Transport der voluminösen Schaumstoffpartikel an den Einsatzort kostspielig ist und die Ölaufnahme gering ist, da offenzellige Schaumstoffpartikel in Wasser rasch absinken und geschlossenzellige eine zu geringe Oberfläche aufweisen.

Aufgabe der vorliegenden Erfindung war es, Polyurethanschaumstoffe zu entwickeln, die diese Nachteile nicht aufweisen. Die Polyurethanschaumstoffe sollten am Einsatzort aus Polyurethansystemen, die in flüssiger Form raumsparend und daher preisgünstig transportabel sind, schnell hergestellt werden.

Überraschenderweise wurde gefunden, daß Polyurethanschaumstoffe zur Absorption von Öl und halogenhaltigen hydrophoben Lösungsmitteln aus Wasser besonders dann geeignet sind, wenn sie hydrophob sind und gleichzeitig geschlossene und offene Zellen in bestimmten Verhältnissen besitzen.

Gegenstand der vorliegenden Erfindung sind somit hydrophobe Polyurethaneschaumstoffe zur Absorption von Öl und/oder gegebenenfalls halogenhaltigen, hydrophoben Verbindungen aus Wasser, hergestellt durch Umsetzung von organischen Polyisocyanaten mit Polyhydroxyverbindungen in Gegenwart von Wasser als Treibmittel und Katalysatoren sowie gegebenenfalls lipophilen Verbindungen, Kettenverlängerungsmitteln, Hilfsmitteln und Zusatzstoffen, die dadurch gekennzeichnet sind, daß die hydrophoben Polyurethanschaumstoffe

a) eine Dichte von 5 bis 26,5 g/Liter, vorzugsweise 6,8 bis 18 g/Liter besitzen,

b) die Zahl der geschlossenen Zellen 3 bis 30%, vorzugsweise 10 bis 20% und der offenen Zellen 97 bis 70%, vorzugsweise 90 bis 80%, bezogen auf die Gesamtzahl an Zellen, beträgt und

c) als Polyhydroxyverbindungen lineare und/oder verzweigte hydroxylgruppenhaltige Polyether mit Molekulargewichten von 300 bis 10000 verwendet werden, die durch Polymerisation von Tetrahydrofuran, 1,2- und 2,3-Butylenoxid, Propylenoxid oder Mischungen aus Propylenoxid und Ethylenoxid mit einem Ethylenoxidgehalt von kleiner als 20 Gew.-%, bezogen auf das Gesamtgewicht der Mischung, erhalten werden.

Die erfindungsgemäßen hydrophoben Polyurethanschaumstoffe werden sowohl nach dem Präpolymerverfahren als auch vorzugsweise nach dem one shot-Verfahren aus organischen Polyisocyanaten, Polyhydroxyverbindungen, Treibmitteln, Katalysatoren, gegebenenfalls Kettenverlängerungsmitteln, Hilfs- und Zusatzmitteln unter zusätzlicher Mitverwendung von lipophilen Verbindungen, vorzugsweise auf Basis von Fettsäuren und/oder Fettsäurederivaten, vorteilhafterweise am Einsatzort, hergestellt.

Zu den zur Herstellung der hydrophoben Polyurethanschaumstoffe verwendbaren Aufbaukomponenten ist folgendes auszuführen:

Als organische Polyisocyanate kommen vorzugsweise aromatische Di- und Polyisocyanate in Frage. Im einzelnen seien z.B. genannt: 2,4- und 2,6-Toluylen-diisocyanat, 2,4'-, 4,4'- und 2,2'-Diphenylmethan-diisocyanat sowie deren Isomerengemische und Mischungen aus Toluylendiisocyanaten und Diphenylmethandiisocyanaten. Vorzugsweise verwendet werden jedoch technische Mischungen aus Diphenylmethan-diisocyanaten und Polyphenylpolymethylen-Polyisocyanaten (Roh-MDJ).

Als Polyhydroxyverbindungen werden zweckmäßigerweise lineare und/oder verzweigte hydroxylgruppenhaltige Polyäther mit Molekulargewichten von ungefähr 300 bis ungefähr 10 000, vorzugsweise von ungefähr 1 000 bis ungefähr 6 000 und Hydroxylzahlen von ungefähr 700 bis ungefähr 20, vorzugsweise von 200 bis 40 verwendet. Die hydroxylgruppenhaltigen Polyäther werden durch Umsetzung von einem oder mehreren, gegebenenfalls substituierten Alkylenoxiden mit 2 bis 4 Kohlenstoffatomen im Alkylenrest mit einem Startermolekül, das mindestens zwei aktive Wasserstoffatome gebunden enhält, hergestellt. Als Alkylenoxide seien beispielhaft genannt: Tetrahydrofuran, 1,2-und 2,3-Butylenoxid und vorzugsweise Propylenoxid. Verwendet werden können ferner Mischungen aus Propylenoxid und Äthylenoxid mit einem Äthylenoxidgehalt vorzugsweise kleiner als 20 Gew.%, bezogen auf das Gesamtgewicht der Mischung. Die Alkylenoxide können einzeln, alternierend nacheinander oder als Mischungen verwendet werden.

Als Startermoleküle kommen beispielsweise in Betracht: Wasser, aliphatische und aromatische Dicarbonsäuren, wie Adipinsäure und Terephthalsäure und vorzugsweise zwei- und mehrwertige Alkohole, wie Äthylenglykol, Propandiol-1,2, Propandiol-1,3, Butandiol-1,4, Hexandiol-1,6, Glycerin, Trimethylolpropan, Hexantriol-2,4,6, Pentaerythrit, Sorbit und Saccharose.

Als Polyhydroxyverbindungen werden vorzugsweise di- und tri-funktionelle hydroxylgruppenhaltige Polypropylenoxide mit Molekulargewichten von 2 000 bis 6 000 verwendet.

Geeignete lipophile Verbindungen sind beispielsweise gegebenenfalls substituierte, gesättigte und/oder ungesättigte aliphatische Fettsäuren mit 10 bis 25, vorzugsweise 12 bis 20 Kohlenstoffatomen im Molekül sowie deren Derivate, vorzugsweise deren Ester mit 2 bis 20 Kohlenstoffatomen im Alkoholrest und Amide. Besonders bevorzugt sind solche lipophilen Fettsäureester und -amide, die mit Isocyanat reagierende Gruppen gebunden enthalten und so ins Polyurethanschaumstoffgerüst eingebaut werden. Im einzelnen seien beispielhaft genannt: Fettsäuren, wie Caprin-, Laurin-, Myristin-, Palmitin-, Stearin-, Arachin-, Lignocerin-, Palmitin-, Öl-, Ricinolein-, Linolsäure und Linolensäure; Fettsäureester, wie Ricinusöl, Tallöl und Addukte aus den genannten Fettsäure und Propylen- und/oder Äthylenoxide und Fettsäureamide, wie Ölsäuremono- und -diäthanolamid, Ricinolsäuremono- und -diäthanolamid sowie deren N,N-Dialkylamide, wie Ricinolsäure-dimethylaminopropylamid.

Zur Herstellung der erfindungsgemäßen hydrophoben Polyurethanschaumstoffe werden die obengenannten Polyhydroxyverbindungen und lipophilen Verbindungen in molaren Mengenverhältnissen von 1:3 bis 1:20, vorzugsweise von 1:6 bis 1:15 und insbesondere von ungefähr 1:10 verwendet.

Gegebenenfalls kann es zweckmäßig sein, neben den höhermolekularen Polyhydroxyverbindungen zusätzlich Kettenverlängerungsmittel zu verwenden. Die Kettenverlängerungsmittel besitzen Molekulargewichte kleiner als 300, vorzugsweise von 80 bis 200, und weisen vorzugsweise zwei aktive Wasserstoffatome auf. In Betracht kommen beispielsweise aliphatische und/oder aromatische Diole mit 2 bis 14, vorzugsweise 4 bis 10 Kohlenstoffatomen, wie Äthylenglykol, Propandiol, Decandiol-1,10 und vorzugsweise Butandiol-1,4, Hexandiol-1,6 und Bis-(2-hydroxyäthyl)-hydrochinon. Die erfindungsgemäßen Polyurethanschaumstoffe werden jedoch vorzugsweise ohne Mitverwendung von Kettenverlängerungsmitteln hergestellt.

Als Treibmittel wird Wasser verwendet, das mit Isocyanatgruppen unter Bildung von Kohlendioxid reagiert. Werden die erfindungsgemäßen hydrophoben Polyurethanschaumstoffe nach dem Präpolymerverfahren hergestellt, so hat es sich als vorteilhaft erwiesen, das NCO-Endgruppen aufweisende Präpolymere unter Wasser, das heißt in Gegenwart eines großen Wasserüberschusses zu verschäumen. Das Mengenverhältnis von Wassermolekül zu NCO-Gruppe des Präpolymeren kann demnach beliebig groß sein, wobei der Wert von ungefähr 5:1 jedoch zweckmäßigerweise nicht unterschritten werden sollte. Gut bewährt haben sich beispielsweise molare Mengenverhältnisse von Wasser zu NCO-Gruppe im Präpolymeren von 8:1 bis 1 000:1 und größer.

Werden die erfindungsgemäßen hydrophoben Polyurethanschaumstoffe jedoch nach dem one shot-Verfahren hergestellt, so kann es je nach Art der verwendeten Polyhydroxyverbindungen und lipophilen Verbindungen gegebenenfalls vorteilhaft sein, das als Treibmittel dienende Wasser mit einem Lösungsvermittler zu vermischen. Als Lösungsvermittler sind alle organischen Lösungsmittel mit Siedepunkten von 20° bis 110°C, vorzugsweise 30° bis 70°C geeignet, die unbegrenzt mit Wasser mischbar und unter den Reaktionsbedingungen gegenüber Isocyanatgruppen inert sind. Genannt seien beispielsweise Aceton, Methyläthylketon, Dioxan und Tetrahydrofuran, vorzugsweise verwendet wird Aceton. Das Wasser wird hierzu mit dem Lösungsvermittler in solchen Mengen gemischt, daß das Gewichtsverhältnis von Wasser zu Lösungsvermittler 1:1 bis 10:1, vorzugsweise 2:1 bis 4:1 beträgt.

Die erfindungsgemäßen Polyurethanschaumstoffe können direkt vor Ort in den Gewässern hergestellt werden. In diesen Fällen hat es sich als vorteilhaft erwiesen, der Reaktionsmischung zur Beschleunigung der Umsetzung zwischen den Polyhydroxyverbindungen, dem Wasser, gegebenenfalls Kettenverlängerungsmitteln und den lipophilen Verbindungen, sofern diese Zerewitinoff aktive Gruppen im Molekül gebunden enthalten, und den organischen Polyisocanaten bekannte hochreaktive Katalysatoren, beispielsweise tertiäre Amine, wie Dimethylbenzylamin, N-Methyl- bzw. N-Äthylmorpholin, Dimethylpiperazin, 1,2-Dimethylimidazol, 1-Aza-bicyclo-(3,3,0)-octan und vorzugsweise Triäthylendiamin und Metallsalze, wie Zinn-dioctoat, Bleioctoat und Zinn-diäthylhexoat und vorzugsweise Zinn-IIsalze und Dibutylzinndilaurat sowie vorzugsweise Mischungen aus tertiären Aminen und organischen Zinnsalzen hinzuzufügen. Zur Erzielung von verschäumungstechnisch günstigen Reaktionszeiten wird in Abhängigkeit von der durch Konstitution bestimmten Reaktivität des gewählten Katalysators bzw. des Katalysatorgemisches die einzusetzende Menge empirisch ermittelt. Werden die erfindungsgemäßen Polyurethanschaumstoffe nach dem one shot-Verfahren vor Ort hergestellt, so müssen die Katalysatoren und -mengen so ausgewählt werden, daß die Startzeiten bei Reaktionstemperaturen von 0° bis 35°C ungefähr 2 bis 10 Sekunden, vorzugsweise 2 bis 5 Sekunden betragen. Als Startzeit (creamtime) ist hierbei die Zeit der störungsfreien Vergießbarkeit der schaumfähigen Mischung zu verstehen, d.h. der zur Verfügung stehende Zeitabschnitt vom Vermischen bis zum Beginn einer sichtbaren Reaktion, in welchem Vermischen der Ausgangstoffe, Austrag aus dem Mischorgan und Versprühen der Reaktionsmasse durchgeführt werden müssen.

Nach einer anderen Verfahrensvariante werden aus den obengenannten Ausgangskomponenten unter Verwendung von üblichen Katalysatoren zur Blockschaumherstellung Polyurethan-Blockschaumstoffe hergestellt, die als solche auf der ölhaltigen Wasseroberfläche ausgebreitet, nach der Absorption von Öl eingesammelt und ausgepreßt werden können oder die zerkleinert und als Füllmaterial für Absorptionssäulen Anwendung finden können.

Der Reaktionsmischung können auch noch Hilfsmittel und Zusatzstoffe einverleibt werden. Genannt seien beispielsweise Stablisatoren, Hydrolysenschutzmittel, Porenregler und oberflächenaktive Stoffe.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Rizinusöl- bzw. Rizinolsäureester und Türkischrotöl, die in Mengen von 0,2 bis 6 Gewichtsteilen pro 100 Gewichtsteile Polyisocyanat angewandt werden.

Nähere Angaben über die obenganannten üblichen Zusatz- und Hilfstoffe sind der Fachliteratur, beispielsweise der Monographie von Saunders und Frisch "High Polymers" Band XVI, "Polyurethanes", Teil 1 und 2, 1967 zu entnehmen.

Wie bereits dargelegt wurde, können die erfindungsgemäßen Polyurethanschaumstoffe nach dem Präpolymer- und vorzugsweise nach dem one shot-Verfahren hergestellt werden.

Erfolgt die Polyurethanschaumstoffherstellung nach dem one shot-Verfahren, so wird üblicherweise eine Mischung aus Polyhydroxyverbindung, lipophiler Verbindung, Wasser und gegebenenfalls Kettenverlängerungsmittel mit dem organischen Polyisocyanat in Gegenwart von Hilfs- und Zusatzstoffen bei Temperaturen von 0° bis 35°, vorzugsweise 15° bis 25°C in solchen Mengen zur Umsetzung gebracht, daß das Verhältnis von Zerewitinoff aktiven Wasserstoffatomen der Polyhydroxyverbindungen, lipophilen Verbindungen und gegebenenfalls Kettenverlängerungsmitteln zu NCO-Gruppe des Polyisocyanats 0,7 bis 1,3:1, vorzugsweise ungefähr 1:1 beträgt und das Verhältnis sämtlicher Zerewitinoff aktiver Wasserstoffatome—gebunden an Polyhydroxyverbindung, lipophile Verbindung, gegebenenfalls Kettenverlängerungsmittel und Wasser zu NCO-Gruppe des Polyisocyanats ungefähr 1,3 bis 5:1, vorzugsweise von 1,5 bis 3:1 ist. Bei Verwendung einer Mischkammer mit mehreren Zulaufdüsen können die Ausgangskomponenten einzeln zugeführt und in der Mischkammer intensiv vermischt werden. Als besonders zweckmäßig hat es sich jedoch erwiesen, nach dem Zweikomponenten-Verfahren zu arbeiten und die Mischung aus Polyhydroxyverbindung, lipophiler Verbindung, gegebenenfalls Kettenverlängerungsmittel und Wasser sowie Katalysatoren, Hilfsmitteln und Zusatzstoffen zu der Komponente A zu vereinigen und als Komponente B die organischen Polyisocyanate zu verwenden. Vorteilhaft ist hierbei nicht nur, daß die Komponenten A und B getrennt beschränkte Zeit gelagert und raumsparend transportiert werden können, sondern vorteilhaft ist insbesondere, daß die Komponenten zur Herstellung der Polyurethanschaumstoffe vor Ort nur intensiv gemischt werden müssen. Die Verteilung der erfindungsgemäßen hydrophoben Polyurethanschaumstoffe auf Gewässern sowie die Abtrennung der mit Öl und/oder halogenhaltigen; hydrophoben Lösungsmitteln getränkten Polyurethanschaumstoffe von der Wasseroberfläche erfolgt mit Hilfe bekannter Vorrichtungen, die zweckmäßigerweise auf Schiffen oder in Flugzeugen installiert sind.

Werden die Polyurethanschaumstoffe nach dem Präpolymerverfahren hergestellt, so werden die NCO-Gruppen aufweisende Präpolymeren, vorzugsweise in Form von Lösungen in organischen Lösungsmitteln, vorteilhafterweise unter Wasser verdüst. Durch Variation des Lösungsmittels kann das Sink-, Steigoder Schwebeverhalten über die Dichte der Präpolymerlösung in gewissen Grenzen variiert werden. Als geeignete Lösungsmittel kommen vorzugsweise solche in Betracht, die mit dem NCO-Gruppen aufweisenden Präpolymeren und dem zu absorbierenden Öl gut mischbar sind. Genannt seien beispielsweise Methylenchlorid, Toluol, Cyclohexan, Hexan u.a. Durch Wahl des Katalysators kann der Zeitpunkt der Umsetzung zu Polyurethanen beeinflußt werden. Durch das bei der Reaktion der NCO-Gruppen haltigen Präpolymeren mit Wasser gebildete Kohlendioxid wird die schaumfähige Präpolymermischung unter gleichzeitigem Aufschäumen aufgetrieben. Das expandierende und bereits expandierte Material steigt an die Wasseroberfläche und absorbiert von unten die aufliegende Öl- bzw. Lösungsmittelschicht. Die mit Öl und gegebenenfalls halogenhaltigen, hydrophoben Lösungsmittel getränkten Polyurethane können danach mit bekannten Methoden von der Wasseroberfläche abgetrennt werden. Zur Herstellung der NCO-Gruppen haltigen Präpolymeren werden die bereits genannten Polyisocyanate und Mischungen aus Polyhydroxyverbindungen und lipophilen Verbindungen in Gegenwart von gegebenenfalls Hilfs- und Zusatzstoffen in solchen Mengen zur Umsetzung gebracht, daß das Verhältnis von NCO-Gruppen zu Gesamthydroxyl der Mischung 50:1 bis 2:1, vorzugsweise 15:1 bis 5:1 beträgt.

Die erfindungsgemäßen hydrophoben Polyurethanschaumstoffe besitzen aufgrund ihres chemischen Aufbaus, ihrer Dichte und des Verhältnisses von offenen zu geschlossenen Zellen ein hohes Absorptionsvermögen für Öl, beispielsweise Roh-, Heiz- und Dieselöl sowie für gegebenenfalls halogenhaltige hydrophobe Verbindungen, beispielsweise Lösungsmittel wie Hexan, Benzol, Toluol, Anilin, Chloroform, Tetrachlorkohlenstoff, Dichloräthan und Hexachlorcyclopentadien.
Die in den Beispielen genannten Teile beziehen sich auf das Gewicht.

Beispiel 1
Zur Herstellung des Polyurethanschaumstoffes wird eine Mischung aus

43,3 Teilen eines trifunktionellen Polypropylenoxids mit Polyäthylenoxidendgruppen mit der OH-Zahl 35 (Lupranol 1351 der BASF AG)
43,3 Teilen eines Umsetzungsproduktes aus Ölsäure und Diäthanolamin (Luprintan HDF der BASF AG)
2,6 Teilen eines silikonhaltigen Stabilisators (DC 190 der Dow Corning)
2,0 Teilen eines Aminkatalysators (Niax A1 der Union Carbide)
2,0 Teilen Dimethyläthanolamin
0,5 Teilen Dibutylzinndilaurat
10 Teilen Wasser und
10 Teilen Aceton

bei Raumtemperatur mit
200 Teilen einer Mischung aus Diphenylmethan-diisocyanaten und Polyphenyl-polymethylen-polyisocyanaten (Roh-MDJ)

zur Reaktion gebracht.

Vergleichsbeispiel A
Eine Mischung aus

70 Teilen N,N,N′,N′-tetrakis-(2-hydroxypropyl)-äthylendiamin (Lupranol 3400 der BASF AG)
20 Teilen Rizinusöl
4 Teilen einer öllöslichen nicht-ionischen oberflächenaktiven Verbindung (Span 20 der Atlas Chemie)
4 Teilen einer wasserlöslichen nicht-ionischen oberflächenaktiven Verbindung (Tween 21 der Atlas Chemie)
5 Teilen eines silikonhaltigen Schaumstabilisators (DC 190 der Dow Corning) und
15 Teilen Trichlorfluormethan

werden bei Raumtemperatur mit
118 Teilen Toluylendiisocyanat

umgesetzt.

Vergleichsbeispiel B
Man verfährt analog den Angaben von Vergleichsbeispiel A, verwendet jedoch anstelle von Rizinusöl 20 Teil Tallöl

Vergleichsbeispiel C
Man verfährt analog den Angaben von Vergleichsbeispiel B, verwendet jedoch anstelle von Toluylendiisocyanat 200 Teile Roh-MDJ.

Beispiel 2 bis 5
Zur Herstellung von Polyurethanschaumstoffen werden Mischungen aus den in Tabelle 1 zusammengefaßten Komponenten bei Raumtemperatur (25°C) mit
200 Teilen einer Mischung aus Diphenylmethan-diisocyanaten und Polyphenyl-polymethylen-polyisocyanaten (Roh-MDJ)
umgesetzt.

Die erhaltenen Kenndaten und das Ölaufnahmevermögen der Schaumstoffe gemäß Beispiele 2 bis 5 und Vergleichsbeispiel A bis C sind in Tabelle 2 zusammengefaßt.

TABELLE 1

| Komponenten | Beispiel 2 | Beispiel 3 | Beispiel 4 | Beispiel 5 |
|---|---|---|---|---|
| Trifunctionelles Polypropylenpolyäthylenglykol mit einer OH-Zahl von 35 (Lupranol 1341) | 43,3 Tl. | 21,75 Tl. | — | — |
| Trifunktionelles Polypropylenglykol mit einer OH-Zahl von 40 (Lupranol 1331) | — | — | 43,4 Tl. | — |
| Trifunktionelles Polypropylenpolyäthylenglykol mit einer OH-Zahl von 26 (Lupranol 1371) | — | — | — | 43,3 Tl. |
| Umsetzungsprodukt aus Ölsäure und Diäthanolamin (Luprintan HDF) | 43,3 Tl. | 65,25 Tl. | 43,3 Tl. | 43,3 Tl. |
| DC 190 | 2,6 Tl. | 2,6 Tl. | 2,6 Tl. | 2,6 Tl. |
| Niax A 1 | 1,5 Tl. | 2,0 Tl. | 2,0 Tl. | 2,0 Tl. |
| Dimethyläthanolamin | 1,0 Tl. | 2,0 Tl. | 2,0 Tl. | 2,0 Tl. |
| Wasser | 10 Tl. | 10 Tl. | 10 Tl. | 10 Tl. |
| Aceton | 10 Tl. | 10 Tl. | 10 Tl. | 10 Tl. |

TABELLE 2

Kenndaten und Ölaufnahmevermögen

| Beispiele/Vergleichsbeispiele | 1 | 2 | 3 | 4 | 5 | A | B | C |
|---|---|---|---|---|---|---|---|---|
| Startzeit [Sec] bei 23°C | 3 | 5 | 4 | 4 | 2 | 15 | 30 | 11 |
| Steigzeit [Sec] bei 23°C | 10 | 20 | 12 | 18 | 10 | 60 | 50 | 45 |
| Raumgewicht[1] [g/Liter] | 10 | 7.0 | 18 | 12 | 16 | 40 | 27 | 105 |
| % geschlossene Zellen[2] | 10 | 3 | 5 | 8 | 10 | 35 | 35 | 99 |
| Ölaufnahme[3] in Gew.% | | | | | | | | |
| nach 24 Stunden | 275 | 375 | 270 | 525 | 330 | 125 | 145 | 105 |
| nach 48 Stunden | 310 | 400 | 295 | 580 | 380 | 130 | 135 | 110 |
| nach 66 Stunden | 580 | 600 | 500 | 640 | 495 | 135 | 205 | 110 |

[1] Die Raumgewichte wurden in einem konischen Becher (1 l Inhalt) bestimmt.

[2] nach Iso TC 61 Wg 1

[3] Die Ölaufnahme wurde im Labor an 5x5x5 cm großen Schaumwürfeln untersucht. Die Würfel wurden 24, 48 bzw. 66 h auf Öl schwimmen gelassen. Anschließend wurden die Würfel 24 h auf Filterpapier getrocknet.

Beispiel 6

25 Teil einer Mischung, bestehend aus

21,7 Teilen eines trifunktionellen Polypropylenoxids mit einer OH-Zahl von 400 (Lupranol 3130 der BASF AG)

21,7 Teilen eines Umsetzungsproduktes aus Ölsäure und Diäthanolamin (Luprintan HDF der BASF AG)

1,3 Teilen eines silikonhaltigen Stabilisators (DC 190 der Dow Corning) und

0,5—2 Teilen eines Aminkatalysators (Niax A1 der Union Carbide)

werden mit 25 bis 75 Teilen eines organischen Lösungsmittels verdünnt und anschließend mit 100 Teilen Roh-MDJ zu einem Isocyanatgruppen haltigen Präpolymeren umgesetzt.

Die NCO-Gruppen haltige Präpolymerlösung wird anschließend unter Wasser verdüst.

Die Art und Menge der organischen Lösungsmittel sowie die verwendeten Katalysatorkonzentrationen sind in Tabelle 3 zusammengefaßt.

Das spezifische Gewicht des NCO-Gruppen haltigen Präpolymeren beträgt lösungsmittelfrei 1,3546 $g/cm^3$.

Wie Tabelle 3 zeigt, kann durch Mischen des Präpolymeren mit organischen Lösungsmitteln die Dichte der Präpolymerlösung von 0,922 bis 1,333 $g/cm^3$ variiert werden.

## TABELLE 3

Kenndaten und Ölaufnahmevermögen

| Lösungsmittel Art | Menge (Teile) | Dichte der Präpolymer- lösung [g/cm$^3$] | Raumgewicht des PU-Schaums [g/l] | Kataly- sator- menge [Teile] | Start- zeit [Sec] 20°C | Steig- zeit[2] [Sec] 20°C | Ölaufnahme in Gew.% nach[1] | | |
|---|---|---|---|---|---|---|---|---|---|
| | | | | | | | 24 | 48 | 66 Std. |
| Chloroform | 75 | 1,3043 ⎫ | | 0,5 | 35 | 1080 ⎫ | | | |
| Chloroform | 75 | 1,3043 ⎬ | 18,0 | 1,0 | 22 | 650 ⎬ | 200 | 220 | 220 |
| Chloroform | 75 | 1,3043 ⎭ | | 2,0 | 14 | 250 ⎭ | | | |
| Toluol | 75 | 1,0711 | 36,6 | 2,0 | 60 | 300 | 140 | 150 | 150 |
| Hexan | 75 | 0,9932 | 30,0 | 2,0 | 70 | 300 | 160 | 160 | 160 |

[1] Die Ölaufnahme wurde im Labor an Schaumkörpern der Größe 5×5×1 cm untersucht
[2] Schaum beginnt an die Wasseroberfläche zu steigen

Beispiel 7 bis 19 und Vergleichsbeispiele D und E

Analog den Angaben von Beispiel 1 werden aus den in Tabelle 4 zusammengefaßten Ausgangskomponenten erfindungsgemäße Polyurethanschaumstoffe und gemäß Tabelle 5 zum Stand der Technik gehörende Vergleichsprodukte hergestellt.

Als Katalysator zur Herstellung der erfindungsgemäßen Schaumstoffe wird eine Mischung aus
4 Teilen Dimethyläthanolamin,
3 Teilen Triäthylen-diamin (®Dabco 33LV der Firma Houdry Process) und
2 Teilen eines Aminkatalysators (®Niax A 1 der Union Carbide Corp.)
verwendet.

## TABELLE 4

| Bsp. | Polyol Art | [Teile] | Wasser [Teile] | DC 190 [Teile] | Aceton [Teile] | F 11 [Teile] | M 20 [Teile] | T 80 [Teile] | Raum- gewicht [9/Liter] |
|---|---|---|---|---|---|---|---|---|---|
| 7 | 1341 | 43,3 | 20 | 1,3 | — | — | 100 | — | 7,2 |
| 8 | 1341 | 43,3 | 20 | 1,3 | 10 | — | 100 | — | 7,0 |
| 9 | 1341 | 43,3 | 40 | 2,6 | 10 | — | 200 | — | 10,0 |
| 10 | und HDF 1341 | 43,3 80 | 50 | 3,0 | — | 25 | 230 | — | 6,8 |
| | und HDF | 20 | | | | | | | |
| 11 | 1341 | 100 | 75 | 3,0 | — | — | 230 | — | 9,9 |
| 12 | 1010 | 100 | 50 | 3,0 | 25 | — | 230 | — | 7,0 |
| 13 | 1020 | 100 | 50 | 3,0 | 25 | — | 230 | — | 9,0 |
| 14 | 1004 | 100 | 50 | 3,0 | — | 25 | 230 | — | 9,5 |
| 15 | 3450 | 100 | 50 | 3,0 | — | — | 230 | — | 6,5 |
| 16 | Propylenglykol | 100 | 50 | 3,0 | — | — | 230 | — | 10,4 |
| 17 | 1341 | 100 | 50 | 3,0 | — | — | 1165 | 50 | 7,0 |
| 18 | 1341 | 100 | 50 | 3,0 | — | — | 95 | 95 | 5,0 |
| 19 | 1341 | 100 | 20 | 3,0 | — | — | 230 | — | 26,5 |

## TABELLE 5

| Vergleichsbeispiele | | D | E |
|---|---|---|---|
| Ausgangsstoffe: | | | |
| Polyol 3602 | [Teile] | 100 | — |
| Polyol 1341 | [Teile] | — | 100 |
| Wasser | [Teile] | 2,2 | 2,8 |
| DC 190 | [Teile] | 1,0 | — |
| ®Tegostab B 4690 (Fa. Goldschmidt) | [Teile] | — | 1,0 |
| N,N-Dimethylcyclohexylamin | [Teile] | 3,0 | — |
| ®Polycat 12 (Amin-Katalysator, Fa. Abbot) | [Teile] | — | 2,0 |
| Dibutylzinn-dilaurat | [Teile] | — | 0,05 |
| F 11 | [Teile] | 40 | 10 |
| M 20 | [Teile] | 140 | 7,1 |
| T 80 | [Teile] | — | 28,3 |
| Raumgewicht | [9/Liter] | 28 | 35 |

Abkürzungen:

| | |
|---|---|
| 1341: | Trifunktionelles Polypropylenpolyäthylenglykol OH-Zahl: 35 |
| HDF: | Umsetzungsprodukt aus Ölsäure und Diäthanolamin |
| 1004: | Polypropylenglykol OH-Zahl: 250 |
| 1010: | Polypropylenglykol OH-Zahl: 110 |
| 1020: | Polypropylenglykol OH-Zahl: 55 |
| 3450: | Tetrafunktionelles Polypropylenpolyäthylenglykol OH-Zahl: 60 |
| 3602: | Polypropylenglykol auf Sucrosebasis OH-Zahl: 400 |
| DC 190: | Silikonhaltiger Schaumstabilisator (DOW Corning) |
| F 11: | Trichlorfluoromethan |
| M 20: | Mischung aus Diphenylmethan-diisocyanaten und Polyphenyl-polymethylen-polyiso-cyanaten (Roh-MDJ) |
| T. 80: | Mischungen aus 2,4- und 2,6-Toluylen-diisocyanaten (Gewichtsverhältnis 80:20) |

Das Ölaufnahmevermögen der erfindungsgemäß hergestellten Schaumstoffe und Vergleichschaumstoffe wurde auf folgende Weise ermittelt:

Eine Wasseroberfläche von 1200 cm$^2$ wurde mit 250 g der in Tabelle 6 genannten unpolaren Flüssigkeiten überschichtet. Auf die verunreinigte Oberfläche wurde eine 5 mm dicke Schaumstoffplatte 15 Minuten aufgelegt. Die Ölaufnahme wurde durch Auswiegen der Schaumplatte als das Vielfache des Schaumstoffgewichts nach folgender Gleichung bestimmt:

$$\text{Ölaufnahmefaktor} = \frac{\text{Schaumstoffgewicht [g]} + \text{unpolare Flüssigkeit [g]}}{\text{Schaumstoffgewicht [g]}}$$

Die erhaltenen Ölaufnahmefaktoren sind in Tabelle 6 zusammengefaßt.

**0 000 933**

### TABELLE 6

| unpolare Flüssigkeit | Schaumstoff nach Bsp./Vglbsp. | | Ölaufnahmefaktor |
|---|---|---|---|
| Dieselöl | 7 | | 95 |
| | 9 | | 90 |
| | 12 | | 80 |
| | 15 | | 98 |
| | 18 | | 90 |
| | 19 | | 60 |
| | | D | 5 |
| | | E | 15 |
| n-Octan | 8 | | 70 |
| | 10 | | 80 |
| | 13 | | 60 |
| | 16 | | 50 |
| | | D | 6 |
| | | E | 14 |
| Benzol | 7 | | 95 |
| | 11 | | 75 |
| | 14 | | 70 |
| | | D | 5 |
| | | E | 17 |
| Toluol | 9 | | 70 |
| | 13 | | 70 |
| | 17 | | 60 |
| | | D | 6 |
| | | E | 15 |
| Petroläther | 10 | | 60 |
| | 11 | | 70 |
| | 12 | | 80 |
| | | D | 3 |
| | | E | 10 |

Die Versuche zeigen das sehr hohe Ölaufnahmevermögen der erfindungsgemäßen Schaumstoffe im Vergleich zu konventionellen Hart- und Weichschaumstoffen.

Säulentrennung: Eine Glas-Säule wurde mit Schaumstoffschnitzeln gefüllt und mit einer Mischung aus Wasser und unpolaren Flüssigkeiten bis zur Sättigung der Schaumstoffschnitzel beschickt. Die erhaltenen Ölaufnahmefaktoren sind in Tabelle 7 zusammengefaßt.

### TABELLE 7

| unpolare Flüssigkeit | Schaumstoff nach Bsp./Vglbsp. | | Ölaufnahmefaktor |
|---|---|---|---|
| Dieselöl | 7 | | 85 |
| | 9 | | 80 |
| | 15 | | 90 |
| | | D | 3 |
| | | E | 10 |
| Anilin | 8 | | 75 |
| | 17 | | 60 |
| | 18 | | 65 |
| | | D | 4 |
| | | E | 8 |
| Tetrachlor-kohlenstoff | 7 | | 90 |
| | 10 | | 70 |
| | 13 | | 60 |
| | | D | 5 |
| | | E | 15 |

9

**Patentansprüche**

1. Hydrophobe Polyurethanschaumstoffe zur Absorption von Öl und/oder gegebenenfalls halogenhaltigen, hydrophoben Verbindungen aus Wasser, hergestellt durch Umsetzung von organischen Polyisocyanaten mit Polyhydroxyverbindungen in Gegenwart von Wasser als Treibmittel und Katalysatoren sowie gegebenenfalls lipophilen Verbindungen, Kettenverlängerungsmitteln, Hilfsmitteln und Zusatzstoffen, dadurch gekennzeichnet, daß die hydrophoben Polyurethanschaumstoffe
a) eine Dichte von 5 bis 26,5 g/Liter besitzen,
b) die Zahl der geschlossenen Zellen 3 bis 30% und der offenen Zellen 97 bis 70%, bezogen auf die Gesamtzahl an Zellen, beträgt und
c) als Polyhydroxyverbindungen lineare und/oder verzweigte hydroxylgruppenhaltige Polyether mit Molekulargewichten von 300 bis 10000 verwendet werden, die durch Polymerisation von Tetrahydrofuran, 1,2- und 2,3-Butylenoxid, Propylenoxid oder Mischungen aus Propylenoxid und Ethylenoxid mit einem Ethylenoxidgehalt von kleiner als 20 Gew.-% bezogen auf das Gesamtgewicht der Mischung, erhalten werden.
2. Hydrophobe Polyurethanschaumstoffe nach Anspruch 1, dadurch gekennzeichnet, daß man
c) als Polyhydroxyverbindungen di- bis trifunktionelle hydroxylgruppenhaltige Polypropylenoxide mit Molekulargewichten von 2000 bis 6000, verwendet.
3. Hydrophobe Polyurethanschaumstoffe nach Anspruch 1, hergestellt nach dem one-shot-Verfahren in Gegenwart von lipophilen Verbindungen, dadurch gekennzeichnet, daß sie
a) eine Dichte von 6,8 bis 18 g/Liter besitzen, wobei
d) als lipophile Verbindungen gegebenenfalls substituierte, gesättigte und/oder ungesättigte aliphatische Fettsäuren mit 10 bis 25 Kohlenstoffatomen sowie deren Ester mit 2 bis 20 Kohlenstoffatomen im Alkoholrest und Amide verwendet werden mit der Maßgabe,
e) daß das molare Mengenverhältnis von Polyhydroxyverbindungen zu lipophilen Verbindungen 1:3 bis 1:20 ist und
f) die Ausgangskomponenten in solchen Mengen zur Reaktion gebracht werden, daß
i) das Verhältnis sämtlicher Zerewitinoff-aktiver Wasserstoffatome, gebunden an Polyhydroxyverbindungen, Wasser, lipophile Verbindungen und gegebenenfalls Kettenverlängerungsmittel zu NCO-Gruppen der Polyisocyanate 1,3 bis 5:1 beträgt und
ii) das Verhältnis von Zerewitinoff aktiven Wasserstoffatomen gebunden an Polyhydroxyverbindungen, lipophile Verbindungen und gegebenenfals Kettenverlängerungsmittel zu NCO-Gruppen der Polyisocyanate 0,7 bis 1,3:1 ist.

**Revendications**

1. Polyuréthanes alvéolaires hydrophobes, pour l'absorption d'huile et/ou de composés hydrophobes, éventuellement halogénés, à partir d'eau, préparés par réaction de polyisocyanates organiques avec des composés polyhydroxy, en présence d'eau comme gonflant et de catalyseurs, ainsi qu'éventuellement des composés lipophiles, des allongeurs de chaîne, des auxiliaires et des additifs, caractérisés par le fait que les polyuréthanes alvéolaires:
a) possèdent und densité de 5 à 26,5 g/litre,
b) ont un pourcentage de cellules fermées de 3 à 30% et de cellules ouvertes de 97 à 70%, rapporté au nombre total de cellules, et
c) ont été préparés en utilisant, comme composés polyhydroxy des polyéthers à groupes hydroxyle, linéaires et/ou ramifiés, de poids moléculaires de 300 à 10 000, qui ont été obtenus par polymérisation de tétrahydrofurane, 1,2- et 2,3-butylènoxyde, propylènoxyde ou mélanges de propylènoxyde et d'éthylénoxyde, d'une teneur en éthylènoxyde inférieure à 20% en poids, rapportée au poids total du mélange.
2. Polyuréthanes alvéolaires hydrophobes selon la revendication 1, caractérisés par le fait que:
c) on utilise, comme composés polyhydroxy des polypropylènoxydes à groupes hydroxyle, di-à trifonctionnels, de poids moléculaires de 2000 à 6000.
3. Polyuréthanes alvéolaires hydrophobes selon la revendication 1, préparés par le procédé "one-shot" en présence de composés lipophiles, caractérisés par le fait que:
a) ils possèdent une densité de 6,8 à 18 g/litre,
d) on utilise, comme composés lipophiles, des acides gras aliphatiques, saturés et/ou insaturés, éventuellement saturés, ayant 10 à 25 atomes de carbone, ainsi que leurs esters ayant 2 à 200 atomes de carbone dans le reste alcool, et des amides, avec la condition que:
e) le rapport molaire entre les quantités de composés polyhydroxy, et de composés lipophiles est de 1/3 à 1/20 et
f) les composants de départ sont mis en réaction en quantités telles que:
i) le rapport entre les divers atomes d'hydrogène actifs de Zerewitinoff, liés aux composés polyhydroxy, l'eau, les composés lipophiles et éventuellement l'agent d'allongement de chaîne, et les groupes NCO des polyisocyanates est de 0,7 à 1,3:1, et

ii) le rapport entre les atomes d'hydrogène actifs de Zerewitinoff, liés aux composés polyhydroxy, les composés lipophiles et éventuellement l'agent d'allongement de chaîne, et les groupes NCO des polyisocyanates est de 0,7 à 1,3:1.

## Claims

1. Hydrophobic polyurethane foams for the absorption of oil and/or hydrophobic compounds, which may or may not contain halogen, from water, produced by reacting organic polyisocyanates with polyhydroxy compounds in the presence of water as blowing agent and catalysts, with or without lipophilic compounds, chain extenders, assistants and additives, which foams have (a) a density of from 5 to 26.5 g/liter, and in which (b) the number of closed cells is from 3 to 30%, and the number of open cells is from 97 to 70%, based on the total number of cells, and in which (c) the polyhydroxy compounds used are linear and/or branched hydroxyl-containing polyethers which have molecular weights of from 300 to 10,000 and are obtained by polymerizing tetrahydrofuran, 1,2- and 2,3-butylene oxide, propylene oxide or a mixture of propylene oxide and ethylene oxide in which the ethylene oxide content is less than 20% by weight, based on the total weight of the mixture.

2. Hydrophobic polyurethane foams as claimed in claim 1, in which (c) the polyhydroxy compounds used are di- or trifunctional hydroxyl-containing polypropylene oxides having molecular weights of from 2000 to 6000.

3. Hydrophobic polyurethane foams as claimed in claim 1, produced by the one-shot process in the presence of lipophilic compounds, which foams have (a) a density of from 6.8 to 18 g/liter, and in which (d) the lipophilic compounds used are substituted or unsubstituted, saturated and/or unsaturated aliphatic fatty acids of 10 to 25 carbon atoms, and their esters with alcohols of 2 to 20 carbon atoms, and their amides, with the proviso that (e) the molar ratio of polyhydroxy compounds to lipophilic compounds is from 1:3 to 1:20, and (f) the starting components are reacted in such amounts that (i) the ratio of all hydrogen atoms which are capable of undergoing a Zerewitinoff reaction and are bonded to the polyhydroxy compounds, water, lipophilic compounds and any chain extender, to the NCO groups of the polyisocyanates is from 1.3 to 5:1, and (ii) the ratio of hydrogen atoms which are capable of undergoing a Zerewitinoff reaction and are bonded to the polyhydroxy compounds, lipophilic compounds and any chain extender, to the NCO groups of the polyisocyanates is from 0.7 to 1.3:1.